# EUROPEAN PATENT SPECIFICATION

(11) **EP 1 683 420 B1**
(45) Date of publication and mention of the grant of the patent: **10.10.2012**
(21) Application number: 06000986.7
(22) Date of filing: 18.01.2006
(51) Int. Cl.: A01N 65/00

(54) **A product with insect-repellent and /or insecticidal activity and method of production thereof**
Produkt mit insektenabwehrender und/oder insektizider Wirkung und Verfahren zu seiner Herstellung
Produit ayant une activité insectifuge et/ou insecticide et son procédé de fabrication

(30) Priority: 18.01.2005 IT mi20050049
(43) Date of publication of application: 26.07.2006
(73) Proprietor: VOMM CHEMIPHARMA S.r.l., 20089 Rozzano MI (IT)
(72) Inventor: Cerea, Giuseppina, 20089 Rozzano (Milano) (IT)
(74) Representative: Ferreccio, Rinaldo

(56) References cited:
- WO-A-00/04794
- US-A- 6 165 475
- DATABASE CA [Online] CHEMICAL ABSTRACTS SERVICE, COLUMBUS, OHIO, US; IKEMOTO, TAKESHI ET AL: "Food compositions containing olive-derived vegetation water" XP002396450 retrieved from STN Database accession no. 2001:681172 & JP 2001 252054 A2 (KANEBO LTD., JAPAN KANEBO LTD., JAPAN) 18 September 2001 (2001-09-18)
- DATABASE WPI Section Ch, Week 199425 Derwent Publications Ltd., London, GB; Class D23, AN 1994-202405 XP002396459 & ES 2 051 251 A6 (VALENZUELA RUIZ G) 1 June 1994 (1994-06-01)

## Description

The present invention generally concerns the food and agriculture industry sector.

In particular, the invention concerns a product capable of preventing and combating insect-caused crop infestations, with particular, though not exclusive, reference to olive fly infestations to olive plantations, and a method for its preparation.

It is well-known that the olive fly represents a serious threat, at times even an actual scourge, to olive plantation of the Mediterranean. Following an olive fly infestation, the olive harvest suffers a dramatic reduction in terms of end yield of oil and the quality of the oil obtained is often irreversibly compromised, owing to its high acidity and its high peroxide content.

It has thus become a standard and often necessary procedure to carry out a preventive, and also during the course of the infestation, treatment of the olive trees with pest control agents belonging to the class of the organophosphorous compounds, such as, for example, rogor and malathion.

Such treatments, as well as exhibiting decreasing efficacy, due to the developing resistance to them exerted by the olive fly and its larvae, also bring about an impoverishment of the quality of the final oil, not least because the latter contains within it an amount of the above-mentioned pest control agents which is proportional to the quantities that have been used for the treatment of the olive trees.

It is for this very reason that it is becoming increasingly important, even from a quantitative point of view, to produce olive oil using organic or bio-dynamic farming techniques. However, this latter sector, indeed, lacks an established method for the prevention and the fight against the olive fly that is compatible with organic farming practices, that is, that does not include treatments using chemical substances.

The problem underlying the present invention was thus that of providing a method to prevent and fight olive fly infestations that would be more effective than conventional treatments using organophosphoric insecticides and that would also be compatible with organic farming requirements.

Such a problem has been solved, according to the invention, by providing an insect-repellent and/or insecticide product obtained by concentration and heat treatment of the by-product vegetable water from olive milling, characterized by a dry matter content of 10% or higher and a pH of 5 or higher.

The concentration of said vegetable water is combined with a heat treatment at a temperature of 100 °C or higher.

The product according to the invention preferably has a dry matter content comprised between 20 and 50% and a pH of 6 or higher and can advantageously be obtained by a method comprising the step of making a continuous stream of said vegetable water flow in the state of a turbulent thin layer, in contact with a heated wall, using a turbo-concentrator as the concentration apparatus.

Among such machines, the one produced and marketed by VOMM IMPIANTI E PROCESSI-Milan (Italy) has been found to be particularly suitable and convenient. Such a machine essentially comprises a horizontal axis cylindrical tubular body, closed at the opposed ends by end walls, having openings for the introduction of vegetable water and of a co-current stream of dry air, a heating jacket to bring the inner wall of said tubular body to a pre-determined temperature, a bladed rotor, rotatably supported in the cylindrical tubular body, where it is made to rotate at a peripheral speed comprised between 15 and 50 m/s.

By using a turbo-concentrator of the above-mentioned type, the method of production of the product according to the present invention is characterized in that it comprises the steps of:
- feeding a continuous stream of vegetable water in said turbo-concentrator, wherein the bladed rotor is made to rotate at peripheral speeds comprised between 15 and 50 m/s,
- centrifuging said vegetable water to form a turbulent and dynamic thin layer wherein the water is maintained in a state of high turbulence by the blades of said bladed rotor,
- conveying said dynamic turbulent thin layer towards the discharge opening of the turbo-concentrator, making it flow in substantial contact with the heated wall thereof towards said discharge opening,
- continuously discharging a stream of said product.
wherein the inner wall of said tubular body is kept at a temperature comprised between 100° and 150°C.

Advantageously, a stream of hot dry air is fed into the turbo-concentrator co-currently to the vegetable water; in this way, the speed of vapor removal is increased, thus reducing the required residence time of the stream in the concentrating apparatus.

The above-mentioned stream of dry air preferably has a flow rate of up to 10 Nm³ of air per liter of evaporated water.

By using the product according to the present invention, the infestation of olive trees by the olive fly is prevented and/or combated by diluting the above-mentioned product in water to achieve a dry matter content comprised between 8 and 15% and uniformly distributing it on the tree foliage.

The prevention of the olive fly infestation is achieved by spraying the plants during a vegetative period anterior to the formation of the fruits or also shortly after the formation of the fruits and repeating the treatment at pre-determined intervals, similar to those used in association with conventional organophosphoric pesticides.

The treatment using the product according to the invention maintains a good efficacy even when carried out at a time following the infestation by the olive fly, thus proving to exhibit not only an insect-repellent activity but also an insecticidal activity.

Although the product according to the invention has so far been tested on a large scale only on olive fly infestations, the preliminary laboratory data and small scale tests data collected show that the insect-repellent and insecticidal activity is exerted also towards other pests of various crops.

The present invention will now be described in greater detail with reference, for illustrative and non-limiting purposes, to the preparation of the product according to the invention using the apparatus schematically illustrated in the one annexed drawing and the use of the product according to the invention to combat olive fly infestations of olive trees.

### Preparation of a product according to the invention

Olive vegetable water obtained as by-product from an olive-mill for olive pressing, having a dry matter content of about 3%, a pH of about 4.5 and a light green, slightly fluorescent color, was concentrated in a turbo-concentrator by VOMM Impianti e Processi, as described above and as schematically illustrated in the annexed Figure.

With reference to such Figure, the turbo-concentrator used for the production of the product according to the invention comprises a cylindrical tubular body 1, closed at the opposed ends by end walls 2, 3 and having a co-axial heating jacket 4 through which a fluid, for example diathermic oil, is circulated, to maintain the inner wall of the body 1 at a pre-determined temperature.

The tubular body 1 has an inlet opening 5 for the vegetable water to be concentrated, an opening 6 for the flow of hot dry air, and a final product discharge opening 7.

In the tubular body 1, a bladed rotor 8 is rotatably supported, the blades 9 of which are helicoidally arranged and are oriented so as to centrifuge and simultaneously convey towards the outlet the vegetable water to be concentrated.

An engine M is provided to drive the bladed rotor at variable speeds.

By using such turbo-concentrator, the above-mentioned vegetable water was continuously stream-fed through the inlet opening 5 at a flow rate of 100 l/h, while a co-current stream of dry air at a temperature of 100 °C having a flow rate of 300 Nm³/h was fed through opening 6. The heating jacket 4 was thermostated at a temperature of 120 °C.

The bladed rotor 8, rotating at a peripheral speed of 40 m/s, centrifuged the vegetable water against the turbo-concentrator wall, where it formed a turbulent and dynamic thin layer.

After an average residence time of about 5 minutes inside the turbo-concentrator, a continuous stream of a product consisting of concentrated vegetable water having a dry matter content of about 30%, a pH of about 6 and a brown color, was discharged through the discharge opening 7. Simultaneously, the air stream-fed into the turbo-concentrator released, through the above-mentioned discharge opening, the steam formed following the heat treatment of the vegetable water.

### Application of a product according to the invention

The concentrated product obtained was used, following dilution in water to achieve a solution having a dry matter content of about 10%, to treat olive trees, of the oglialora cultivar, of about 100 years of age.

Two plants were treated with the solution by uniformly distributing the solutions on the foliage. Four treatments were carried out at intervals of 8 days from each other, each time using 4 liters of solution per plant.

50 olives were taken from each treated plant one day before the last treatment and the same number of olives was taken from nearby non-treated plants, used as controls.

Another sampling of 50 olives from each plant and from control plants was carried out five days after the last treatment.

From observations of the collected olives under the stereoscopic binocular microscope, the following results were obtained:
Treated samples taken one day before the last treatment
   - 1 eclosion hole
   - 1 oviposition cavity
Controls:
   - 9 oviposition cavities
   - 1 egg
   - 3 eclosion holes
   - 2 dead larvae
   - 2 pupae
   - 2 small larvae
Treated samples taken five days after the last treatment:
   - 2 eclosion holes
   - 2 blocked old fertile punctures
Controls:
   - 8 eclosion holes
   - 6 large larvae
   - 19 small larvae
   - 3 pupae
   - 4 tunnels
   - 1 blocked puncture.

The collected data can be summarized by the following table:

| | 10% d.m. solution Active infestation % | Controls Active infestation % |
|---|---|---|
| 1 d before the last treatment | 4% | 40% |
| 5 d after the last treatment | 8% | 82% |

From the table it can be seen that the treatment using the product according to the invention having about a 10% dry matter content has conferred significant protection to the plants from olive fly infestation, thus proving its insect-repellent and insecticidal activity.

The olives picked from the trees treated with the product according to the present invention were further subjected to milling with a lab-scale mill and compared to olives picked from the nearby non-treated (control) trees.

The oil obtained from the treated and the control olives was then analyzed for the determination of acidity and peroxides.

The acidity of the oil obtained from the treated olives, expressed as % of free oleic acid, was 0.10 whereas the acidity of the oil obtained from the control olives was 0.20.

The peroxide content of the oil obtained from the treated olives was 1.30 meq O₂/kg and that of the oil obtained from the control olives was 2.40 meq O₂/kg.

These results show that the treatment of the olive trees with the product according to the invention has also determined an improvement of the organoleptic/nutritional characteristics of the oil (dramatic reduction of the acidity) and a highly protective effect against free radicals and oxidative processes (peroxide content practically halved compared to the controls).

Finally, the polyphenol content of the oil obtained from the olives treated with the product according to the invention was high and comparable with that of high quality extra-virgin oils.

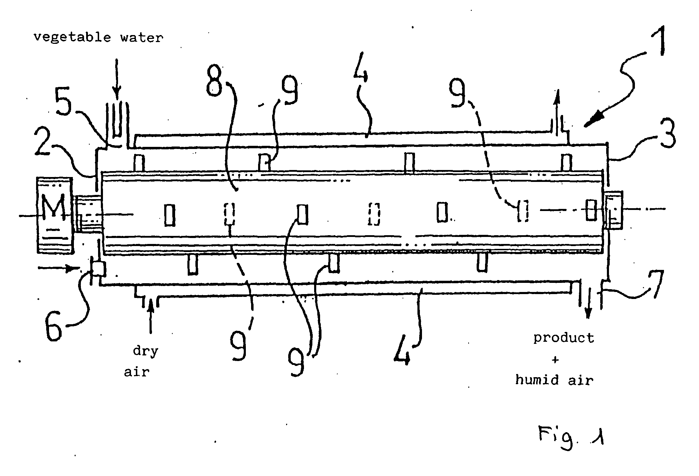

## Claims

1. Insect-repellent and/or insecticidal product obtained by concentration under heat treatment at a temperature of 100 °C or higher of by-product vegetable water from olive milling, **characterized in that** it has a dry matter content comprised between 20 and 50% and a pH of 6 or higher.

2. Method for the preparation of a product according to claim 1, **characterized in that** it comprises the steps of:
- feeding a continuous stream of said vegetable water in a turbo-concentrator comprising a horizontal-axis cylindrical tubular body (1), having an inlet opening (5) for said vegetable water and a final product discharge opening (7), a heating jacket (4) to bring the inner wall of said tubular body at a pre-determined temperature, a bladed rotor (8), rotatably supported in the cylindrical body (1) where it is made to rotate at peripheral speeds variable between 15 and 50 m/ s,
- centrifuging said vegetable water to form a turbulent and dynamic thin layer wherein the water is maintained in a state of high turbulence by the blades (9) of said bladed rotor (8),
- conveying said dynamic turbulent thin layer towards the discharge opening (7) of the turbo-concentrator, making it flow in substantial contact with the heated wall thereof towards said discharge opening,
- continuously discharging a stream of said product;
wherein the inner wall of said tubular body is kept at a temperature comprised between 100° and 150°C.

3. Method according to claim 2, **characterized in that** a stream of hot dry air is fed into said turbo-concentrator co-currently to the continuous stream of said vegetable water.

4. Method of preventing and/or combating olive fly infestation of olive trees comprising the step of uniformly applying the product according to any one of the previous claims on the foliage of said trees after having brought the dry matter content thereof to a value comprised between 8 and 15% possibly by dilution with water.

5. Use of by-product vegetable water from olive milling for the production of an insect-repellent and/or insecticidal product against the olive fly, said insect-repellent and/or insecticidal product being obtained by concentration under heat treatment at a temperature of 100 °C or higher of by-product vegetable water from olive milling, and being **characterized in that** it has a dry matter content of 10% or higher and a pH of 5 or higher.

## Patentansprüche

1. Insekten abwehrendes und/oder Insekten tötendes Produkt, das durch Konzentration unter Wärmebehandlung bei einer Temperatur von 100°C oder darüber von als Nebenprodukt erscheinendem pflanzlichem Wasser gewonnen wird, das einem Olivenmahlvorgang entstammt, **dadurch gekennzeichnet, dass** es einen Trockenmassegehalt zwischen 20 und 50% und einen pH-Wert von 6 oder darüber hat.

2. Verfahren zur Herstellung eines Produkts nach Anspruch 1, **dadurch gekennzeichnet, dass** es die folgenden Schritte umfasst:
- Einleiten eines kontinuierlichen Stroms des pflanzlichen Wassers in einen Turbo-Konzentrator, der einen zylindrischen rohrförmigen Körper (1) mit horizontaler Achse, welcher eine Einlassöffnung (5) für das pflanzliche Wasser und eine Auslassöffnung (7) für ein Endprodukt aufweist, einen Heizmantel (4), um die Innenwand des rohrförmigen Körpers auf eine vorbestimmte Temperatur zu bringen, und einen mit Schaufeln versehenen Rotor (8) umfasst, der drehbar Im zylindrischen Körper (1) gelagert ist, wobei man ihn bei Umfangsgeschwindigkeiten rotieren lässt, die zwischen 15 und 50 m/s variieren können,
- Zentrifugieren des pflanzlichen Wassers zur Ausbildung einer turbulenten und dynamischen Dünnschicht, wobei das Wasser durch die Schaufeln (9) des mit Schaufeln versehenen Rotors (8) in einem Zustand hoher Turbulenz gehalten wird,
- Befördern der dynamischen turbulenten Dünnschicht in Richtung zur Auslassöffnung (7) des Turbo-Konzentrators, wobei man es unter weitgehendem Kontakt mit dessen beheizter Wand in Richtung zur Auslassöffnung fließen lässt,
- kontinuierliches Abgeben eines Stroms des Produkts;
wobei die Innenwand des rohrförmigen Körpers auf einer Temperatur zwischen 100 und 150°C gehalten wird.

3. Verfahren nach Anspruch 2, **dadurch gekennzeichnet, dass** ein Strom aus heißer trockener Luft in den Turbo-Konzentrator im Gleichstrom mit dem kontinuierlichen Strom des pflanzlichen Wassers eingeleitet wird.

4. Verfahren zum Verhindern und/oder Bekämpfen eines Befalls von Olivenbäumen durch Olivenfliegen, den Schritt umfassend, das Produkt nach einem der vorhergehenden Ansprüche gleichmäßig auf das Blattwerk der Bäume aufzubringen, nachdem dessen Trockenmassegehalt auf einen Wert gebracht wurde, der zwischen 8 und 15% liegt, gegebenenfalls durch Verdünnen mit Wasser.

5. Verwendung von als Nebenprodukt erscheinendem pflanzlichem Wasser aus einem Olivenmahlvorgang zur Herstellung eines Insekten abwehrenden und/oder Insekten tötenden Produkts gegen Olivenfliegen, wobei das Insekten abwehrende und/oder Insekten tötende Produkt durch Konzentration unter Wärmebehandlung bei einer Temperatur von 100°C oder darüber von als Nebenprodukt erscheinenden pflanzlichem Wasser gewonnen wird, das einem Olivenmahlvorgang entstammt, und **dadurch gekennzeichnet ist, dass** es einen Trockenmassegehalt von 10% oder mehr und einen pH-Wert von 5 oder darüber hat.

## Revendications

1. Produit répulsif contre les insectes et/ou insecticide obtenu par concentration sous traitement thermique à une température de 100 °C ou plus de dérivé d'eau de végétation à partir de broyage d'olive, **caractérisé en ce qu'**il a une teneur en matières sèches comprise entre 20 et 50 % et un pH de 6 ou plus.

2. Procédé pour la préparation d'un produit selon la revendication 1, **caractérisé en ce qu'**il comprend les étapes consistant à :
- alimenter un flux continu de ladite eau de végétation dans un turboconcentrateur comprenant un corps tubulaire cylindrique à axe horizontal (1), ayant une ouverture d'entrée (5) pour ladite eau de végétation et une ouverture de décharge de produit final (7), une chemise de chauffage (4) pour amener la paroi interne dudit corps tubulaire à une température prédéterminée, un rotor à lames (8), soutenu en rotation dans le corps cylindrique (1) où il est amené à tourner à des vitesses périphériques variables entre 15 et 50 m/s,
- centrifuger ladite eau de végétation pour former une couche mince turbulente et dynamique dans laquelle l'eau est maintenue dans un état de turbulence élevée par les lames (9) dudit rotor à lames (8),
- transporter ladite couche mince turbulente dynamique vers l'ouverture de décharge (7) du turboconcentrateur, amenant son écoulement en contact substantiel avec la paroi chauffée de celui-ci vers ladite ouverture de décharge,
- décharger en continu un flux dudit produit ;
la paroi interne dudit corps tubulaire étant maintenue à une température comprise entre 100 °C et 150 °C.

3. Procédé selon la revendication 2, **caractérisé en ce qu'**un flux d'air sec chaud est alimenté dans ledit turboconcentrateur à co-courant avec le flux continu de ladite eau de végétation.

4. Procédé de prévention et/ou de lutte contre l'infestation par la mouche de l'olive d'oliviers comprenant l'étape d'application uniforme du produit selon l'une quelconque des revendications précédentes sur le feuillage desdits arbres après avoir amené la teneur en matières sèches de celui-ci à une valeur comprise entre 8 et 15 %, éventuellement par dilution avec de l'eau.

5. Utilisation de dérivé d'eau de végétation de broyage d'olive pour la production d'un produit répulsif contre les insectes et/ou insecticide contre la mouche de l'olive, ledit produit répulsif contre les insectes et/ou insecticide étant obtenu par concentration sous traitement thermique à une température de 100 °C ou plus de dérivé d'eau de végétation de broyage d'olive, et étant **caractérisé en ce qu'**il a une teneur en matières sèches de 10 ou plus et un pH de 5 ou plus.
